# EUROPEAN PATENT APPLICATION

(11) **EP 1 398 705 A1**
(43) Date of publication of application: **17.03.2004**
(21) Application number: 02730782.6
(22) Date of filing: 30.05.2002
(51) Int. Cl.: G06F 13/00, G06F 12/00, H04L 12/56, H04L 29/08

(54) **FILE DELIVERY SYSTEM, FILE DELIVERY SERVER APPARATUS, AND RECEPTION CLIENT APPARATUS**

(30) Priority: 31.05.2001 JP 2001165112
(71) Applicant: MATSUSHITA ELECTRIC INDUSTRIAL CO., LTD., Kadoma-shi, Osaka 571-8501 (JP)
(72) Inventor: UESUGI, Akio, Shinagawa-ku, Tokyo 140-0014 (JP); MORIMOTO, Tetsuro, Kawasaki-shi, Kanagawa 216-0015 (JP); NIKI, Teruki, Ota-ku, Tokyo 143-0014 (JP); ISHIDA, Takashi, Yokohama-shi, Kanagawa 240-0052 (JP)
(74) Representative: Betten & Resch
(86) International application number: PCT/JP2002/005270
(87) International publication number: WO 2002/097634

(57) **Abstract**

The file distribution system comprises the file distribution server 1 transmitting the reception parameter, comprising multiple retransmission request transmission addresses corresponding to multiple retransmission server apparatuses, the retransmission request delay-time P and retransmission request distributed-time D, with respect to each file distribution, and the reception client apparatuses 2-1, 2-1, 2-N detecting reception failure, waiting for time(P + D × R) until the retransmission request is transmitted, transmitting all of the retransmission requests generated during the waiting time, trying sequential access to the retransmission request transmission addresses until connection is succeeded.

## Description

### BACKGROUND OF THE INVENTION

### Field of the invention

The present invention relates to a file distribution server, reception client apparatus, and a file distribution system having high-speed multicasting to multi-reception bases with the use of multicast for a down-link of the data path in the file distribution system and the stability of distribution by the combined use of an up-link of data path.

### Description of the Related Art

In the related art, for example, a file distribution system as disclosed in Japan Patent Laid Open No. H8-56221 is known. In this system, multicast distribution by wireless communication protocol via the wireless network is performed; and when some part of transmission failure is detected, a retransmission request is transmitted by a wired communication protocol via the communication network.

Moreover, in the system disclosed in Japan Patent Laid Open No. H11-177477, transmission failure is detected by checking the received data block, and a retransmission request is transmitted after a predetermined period of time.

However, in cases of the above-mentioned file distribution systems, firstly, it is impossible to switch the retransmission server and the delivery confirmation server while operating the file distribution system for maintenance and test transmission facility including the retransmission server and the delivery confirmation server.

Secondly, it is impossible to switch from the retransmission server and the delivery confirmation server to the backup without interrupting file distribution in execution during system failure of the transmission facility including the retransmission server and the delivery confirmation server.

Thirdly, it is a lengthy process to transmit all of the retransmission requests and the delivery confirmations, despite the small number of the reception clients and small size of the distribution object file because occurrences of the retransmission requests and the delivery confirmations are reduced to frequency which can be processed for the up-link, for the retransmission server, and for the delivery confirmation server by distributing transmission of the retransmission request and the delivery confirmation for some length of time in preparation for reaching the numerical limit of reception bases and size of distribution files caused by an increase of the retransmission request and the delivery confirmation based on an increase in the number of the reception server apparatuses and an increase in the size of the distribution object file.

Fourthly, from the standpoints of reducing communication costs (e.g. telephone costs), it is required for the up-link from the reception client apparatus to be connected only when it is necessary, and to reduce the number of connections.

### SUMMARY OF THE INVENTION

In order to solve the above deficiency, firstly, the present invention is a file distribution server apparatus multicast distributing the address of the retransmission request and the delivery confirmation with respect to each file. Therefore, the retransmission server apparatus and the delivery confirmation server apparatus can be switched only by changing the retransmission request address or the delivery confirmation address which are distributed as the reception parameter with respect to each file distribution without changing the configuration of the reception client apparatus.

Secondly, the reception client apparatus, sequentially testing connections from one retransmission request address, selected from multiple retransmission request addresses that have been received, to another until the connection is successful, is provided.

Therefore, the file distribution, including retransmission, becomes possible to carry out even if an interruption occurs in the retransmission server while the file distribution is running.

Thirdly, the file distribution server apparatus distributing the retransmission request distributed-time determined with respect to each file distribution based on the number of the reception clients, the file size of the distribution object file, or the time zone of distribution is provided.

Therefore, it is possible to set a requisite minimum time of retransmission distributed-time with respect to each distribution, in cases where the number of the reception client is different in each distribution. In cases of a large number of reception client apparatuses of the distribution object or the large size of the distribution object file, it becomes possible to receive the retransmission request distributed-time or the delivery confirmation distributed-time by setting them longer. Moreover, in the case of a small number of reception client apparatuses of the distribution object or the small size of the distribution object file, it becomes possible to reduce the amount of time for file distribution by setting the retransmission request distributed-time or the delivery confirmation distributed-time shorter.

Fourthly, the reception client apparatus transmitting the retransmission requests of unreceived data, detected during the retransmission request waiting term from the detection of the reception failed data until the transmission of the retransmission request, at one connection to the up-line, and disconnecting the up-line.

Therefore, it becomes possible to reduce the load of the retransmission server and connection costs by connecting to the up-link from the reception client apparatus only when it is necessary and reducing the number of connections. It is especially when data reception fails in a wireless network because of weather conditions.

### BRIEF DESCRIPTION OF THE DRAWINGS

Fig. 1 is a block diagram of the file distribution system in the first and second embodiments of the present invention.
Fig. 2 is a sequential view illustrating an operation of the file distribution system in the first embodiment of the present invention.
Fig. 3 is a view of transmission data of the file distribution server in the first embodiment of the present invention.
Fig. 4 is a view of transmission data of the file distribution server in the second embodiment of the present invention.
Fig. 5 is a view illustrating data transmission and the point of retransmission request in the third embodiment of the present invention.
Fig. 6 is a flow chart of the operation of the file distribution apparatus in the first and the second embodiments of the present invention.
Fig. 7 is a flow chart of the operation of the reception client apparatus in the first and second embodiments of the present invention.

### DETAILED DESCRIPTION OF THE PREFERRED EMBODIMENT

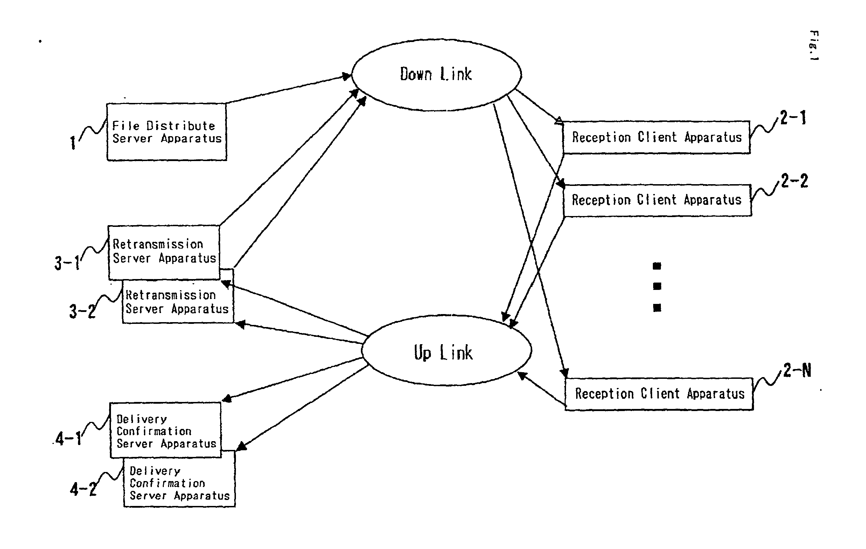

Hereinafter, the embodiments of the present invention will be described with the use of Fig. 1 to Fig. 7.

Fig. 1 is a block diagram of the first embodiment of the present invention, 1 is a file distribution server apparatus transmitting data block with respect to each file distribution via download multicast line, 2-1, 2-2, 2-N are reception client apparatuses receiving data block and transmitting retransmission request or delivery confirmation via up-link, 3-1 and 3-2 are the first and second retransmission server apparatuses receiving retransmission requests and retransmitting required data, while 4-1 and 4-2 are the first and second delivery confirmation server apparatuses receiving the delivery confirmation. Note that the retransmission server apparatus and the delivery confirmation server are not limited to two, and may be more than two.

The retransmission request corresponds to a message requesting redistribution of an object file when the reception client apparatus has failed to receive the data block, and is transmitted from the reception client apparatus to the retransmission server apparatus.

The delivery confirmation corresponds to a message notifying whether the reception client apparatus has successfully received all of the data block and the whole distribution object file, or whether it has successfully stored the whole distribution object file; and is transmitted from the reception client apparatus to the delivery confirmation server.

The reception parameter corresponds to a parameter value for receiving the data block into which the reception client apparatus divides the distribution object file. Examples of parameters include a distribution ID, a reception failure detection interval, a retransmission request address, a retransmission request delay-time, a retransmission request distributed-time, a delivery confirmation address, a delivery confirmation distributed-time, and padding data.

The distribution ID corresponds to the ID given by the file distribution server apparatus with respect to each file distribution.

The reception failure detection interval corresponds to the time interval where the reception client apparatus detects reception failure of data block.

The retransmission request address corresponds to the destination to which retransmission request, informing that the reception client apparatus has detected reception failure of more than one data block, is transmitted. The retransmission request address may be comprised of the IP address of retransmission server apparatus and the serial number of the port.

The retransmission request delay-time corresponds to elapsed time from when failure of reception of data block is detected until retransmission request is transmitted in the case where the reception client apparatus failed to receive data block.

The retransmission request distributed-time corresponds to the time from when the retransmission request delay-time passed until the transmission of the retransmission request is to be terminated, in cases where the reception client apparatus detects failure of the reception of data block. For example, in cases where the retransmission request delay-time is 5 minutes and the retransmission request distributed-time is 1 minute, the transmission of the retransmission request is started at least 5 minutes later from when reception failure of data block was detected, and is to be terminated until 6 minutes has passed.

The delivery confirmation address corresponds to the destination to which delivery confirmation, notifying whether the reception client apparatus has successfully received all the data blocks and successfully stored all distribution object files, is transmitted. The delivery confirmation address may be expressed as an IP address of delivery confirmation server apparatus and a serial number of the specific port.

The delivery confirmation distributed-time corresponds to the time from when transmission of the delivery confirmation is carried out to the time when the reception client apparatus receives all of the data block and determines whether the entire distribution object file has been successfully stored.

The padding data corresponds to data which is added to at the end of the file in the data block including file termination of the distribution object.

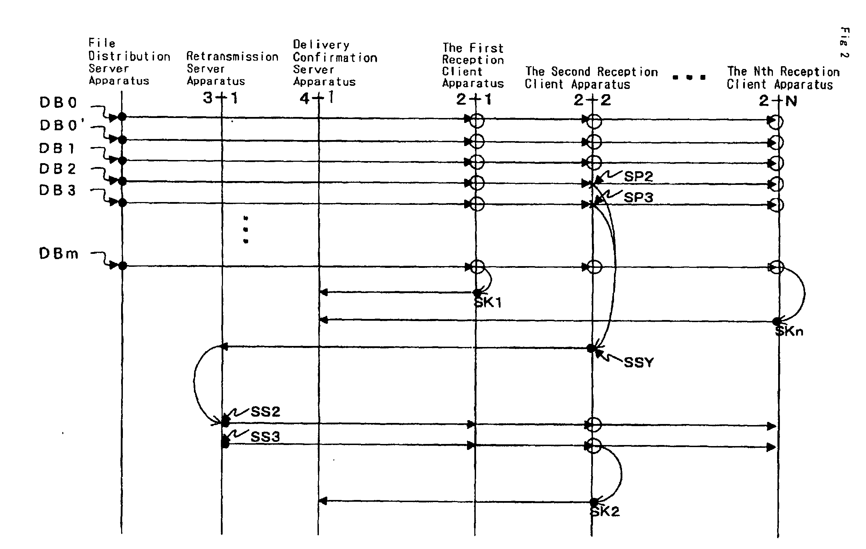

The concept of the operation sequence of the file distribution system comprised hereinabove will be described with the use of Fig. 2.

The file distribution server apparatus 1 repeats more than one multicast transmission of the data block, including a reception parameter to the reception client apparatus of the reception object via a down-link (DB0, DBO'). Next, the data block, to which the distribution object file is split, is sequentially transmitted to the reception client apparatus of the reception object via a multicast line (DB1, DB2, DB3, DBm). The reception client apparatuses 2-1, 2-2, 2-N sequentially receive the data block DB0 ∼DBm. The first reception client apparatus, which has successfully received all data blocks, notifies the success of file reception to the delivery confirmation server apparatus by delivery confirmation SK1. The second reception server apparatus 2-2, which has failed to receive two data blocks, DB2 and DB3 (SP2, SP3), notifies of both retransmission requests of the data blocks DB2 and DB3 to the retransmission server apparatus 3-1 via an up-link (SSY). The retransmission server apparatus 3-1 transmits the data blocks DB2 and DB3 via down multicast line (SS2, SS3). The first reception client apparatus, which has already received the data blocks DB2 and DB3, does not receive DB22 or DB32 which are retransmitted. The second reception client apparatus notifies that transmission of all the data blocks comprising the distribution object file has successfully delivered confirmation server apparatus 4-1 via the up-link as SK2.

The operation of each component of the file distribution system, the concept of the operation sequence thereof has been described hereinabove, will be described hereinafter.

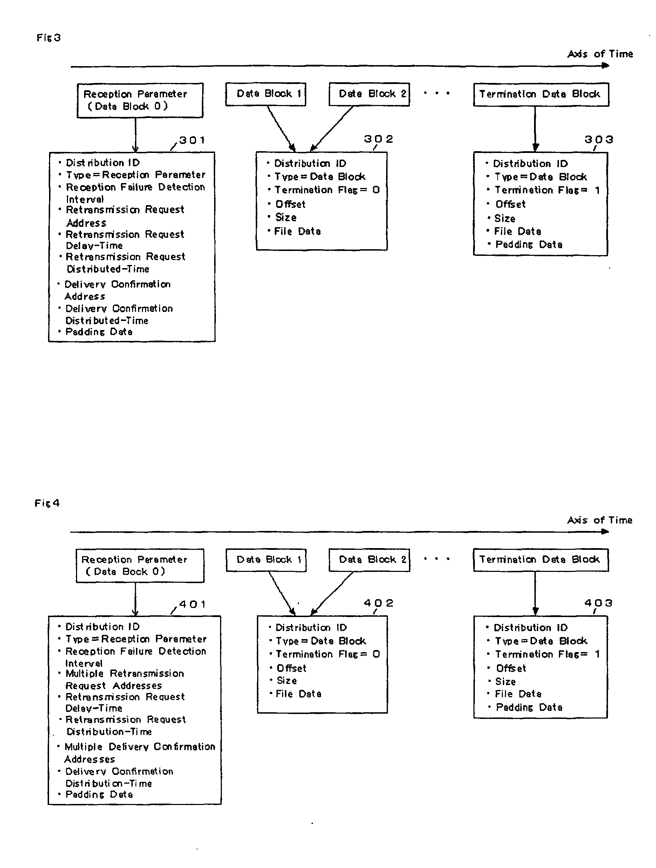

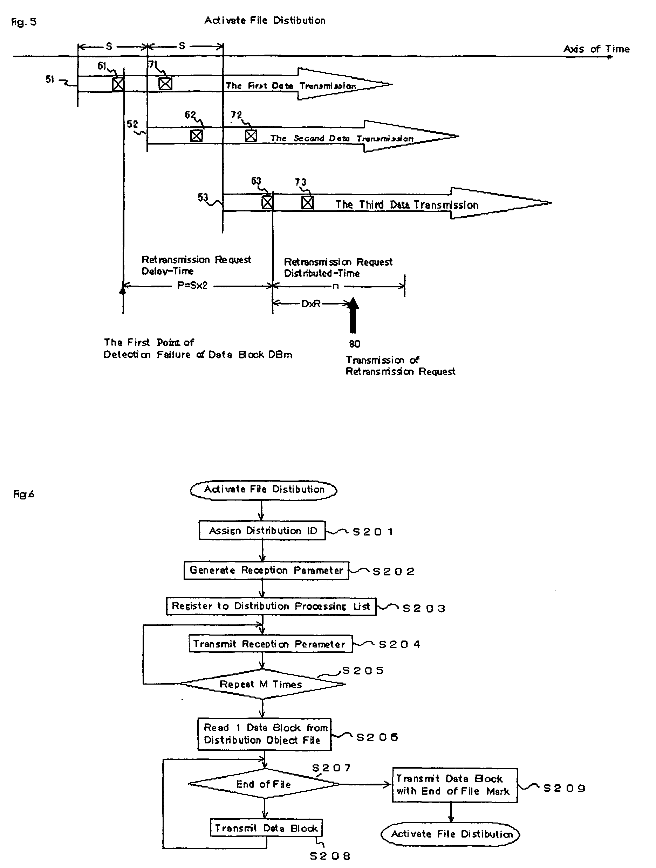

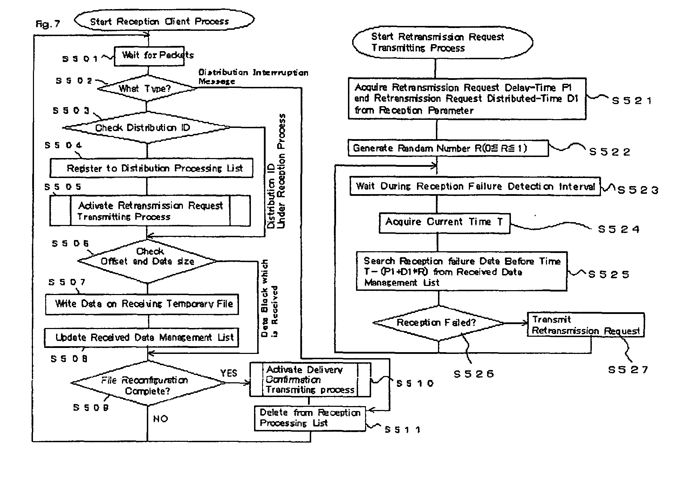

The operation of the file distribution server apparatus, which will be described with the use of Fig. 6, comprises the following steps:
a step of assigning one distribution ID overlapping the others when the file distribution is newly activated (step S201);
a step of generating the reception parameter 301 shown in Fig. 3 (step S202);
a step of registering it on the distribution processing list (step S203) ;
a step of transmitting the reception parameter (N bit length, including padding data) M times (step S204 and S205);
a step of transmitting one data block (N bit length) of the distribution object file from the head to the end-of-file data (steps S206, S207 and S208).

Here, the end-of-file data, to which padding data (more than 0 bits) is attached, is transmitted as the data block having N bit length and as the end of flag =1 (step S209). Fig. 3 shows content of data transmitted when the file distribution server apparatus 1 executes file distribution. In Fig. 3, 301 corresponds to the reception parameter used for reception processing, 302 corresponds to data block into which the distribution object file is split, and 303 corresponds to the end-of-data block comprising the end-of-file data of the data block.

The operation of the file reception client apparatus 2-n (n=1, 2, N), which will be described with the use of Fig. 7, comprises the following steps:
a step of waiting for the data packet to a specific multicast address when the file reception client apparatus 2-n is activated (step S501);
a step of determining, by type field of packet header, whether the data packet is a distribution interruption message or another packet when the data packet to a specific multicast address is received (step S502);
a step of deleting an item of the relevant distribution ID from the reception processing file distribution list in cases where the reception data packet is the distribution interruption message (step S511);
a step of waiting for the data packet again (step S501);
a step of searching the reception processing list by distribution ID attached to data block in cases where the reception data packet is data block (step S503) (The reception parameter is also considered as a kind of data block as shown in 301 of Fig. 3);
a step of registering the relevant distribution ID to the reception processing list as the distribution processing when the relevant ID is not detected (step S504);
a step of activating the retransmission request transmission process (step S505);
a step of searching the received data management list by distribution ID, offset, and size of data, and of determining whether unreceived data is included therein (step S506);
a step of writing or overwriting the reception data block on the relevant offset position of the reception processing contemporary file when the unreceived data is included therein (step S507);
a step of updating the received data management list of the file reception process information specified by the distribution ID (step S508) ;
a step of considering that reception of the relevant file is completed when the data block with the end mark of the relevant distribution ID has already been received and there has been no reception failed data (step S509) ;
a step of transmitting the delivery confirmation packet to the delivery confirmation server, specified as the delivery confirmation destination (IP address and port) by file information with respect to each distribution ID, by TCP/IP protocol when the time, calculated by a random number less than the response distributed-time D specified by the file information with respect to each distribution ID, has passed since that point (step S510); and
a step of deleting an item of the relevant file distribution ID from the reception processing list (step S511).

Note that a random number less than the response distributed-time D may be calculated from that the delivery confirmation distributed-time, specified by the reception parameter, multiplied by a random number, no less than 0 nor more than 1, or may be generated directly, however. Moreover, as mentioned hereinafter, it may be calculated from that a value of function, wherein the number of the reception client apparatus corresponds to an input, multiplied by the delivery confirmation distributed-time.

The retransmission request transmission process activated by the reception client apparatus comprises the following steps;
a step of acquiring the reception failure detection time interval I, retransmission request delay time P1 and retransmission request distributed-time D1 from the reception parameter of the relevant distribution ID (step S521);
a step of generating random number R (0≦R≦1) (step S522);
a step of detecting unreceived data after (P1+D1×R) seconds has passed since predetermined reception time by searching received data list of reception ID at every interval I specified by the reception failure detection time of the reception parameter (step S526); and
a step of transmitting the retransmission request of the relevant reception failed data at every detection thereof (step S527). Here, the retransmission request is transmitted to the retransmission server, specified as the retransmission request address (IP address and port) by the reception parameter with respect to each distribution ID, by TCP/IP protocol. Moreover, R may be generated as a number, no fewer than 0 nor more than 1, as the value of function wherein the number of the reception client apparatus corresponds to an input, not by generating a random number. An example of such a function includes a function wherein the number of the reception client, which is set to an integer number starting from 0, is divided by the largest number of the reception client apparatus.

When the retransmission server apparatus 3-1 receives the retransmission request, the reception server ID, the distribution ID, the data offset, and the size of the data, which are included in the retransmission request, are recorded, and after a predetermined time, the relevant data is acquired and is retransmitted by multicast. However, a retransmission request of the same data, received within a predetermined time until retransmission, is retransmitted at one time. Moreover, in cases where the satellite communication cannot be used at the predetermined time of retransmission, unicast is used for the retransmission or the distribution termination packet is distributed and the retransmission is cancelled. Moreover, in cases where reception frequency of the retransmission request of one distribution ID exceeds a predetermined level, the distribution termination packet is distributed and the distribution is terminated.

The delivery confirmation server apparatus 4-1 stores a list of the reception server ID of the distribution object with respect to each distribution ID, records the reception client ID received completely with respect to each reception of delivery confirmation packet, stores unreceived reception client ID, counts and shows the number (or rate) of received client apparatus, thereby enabling to keep track of file distribution conditions of the file distribution system in real time. In the file distribution system operating as described hereinabove, in order to substitute functions of the retransmission server apparatus 3-2 for the retransmission server apparatus 3-1 because of disruption or maintenance etc. of the retransmission server apparatus 3-1, an address of the retransmission server apparatus 3-2 is embedded in the reception parameter as the retransmission request transmission address instead of address of the retransmission server apparatus 3-1 at the point of generating the reception parameter (step S202). Therefore, the reception client receiving the relevant reception parameter transmits the retransmission request to the retransmission server apparatus 3-2. In cases where functions of the delivery confirmation server apparatus 4-1 is substituted by the delivery confirmation server apparatus 4-2, delivery confirmation address is changed as described above.

In the first embodiment of the present invention as described hereinabove, by changing the delivery confirmation address and the retransmission request transmission address included in the reception parameter, it becomes possible to change the delivery confirmation server and the retransmission server with respect to each distribution ID, thus enabling expansion, repair modifications, maintenance, testing, and change of the system configuration of the delivery confirmation server or the retransmission server without shutting down the operation of the entire system. Moreover, the retransmission request distributed-time D1 is included in the reception parameter, so that it becomes possible to control the response distributed-time of the delivery confirmation and the retransmission request with respect to each distribution, to adjust the response distributed-time of the delivery confirmation or the retransmission request with respect to each distribution, and to count the delivery confirmation or the retransmission request in a short time according to the processing ability of the retransmission server or the delivery confirmation server, number of reception bases, and error rate of the down-link. Moreover, by comprising the reception client apparatus, setting the retransmission request delay time and the retransmission request distributed-time and transmitting multiple retransmission requests, for reducing a number of connections of the up-link and distributing connection time, it becomes possible to reduce the connection cost of the up-link and required processing ability of the retransmission server.

Note that some of the file distribution server apparatus, the retransmission server apparatus, and the delivery confirmation server apparatus, which are the components of the above embodiment, may be operated in parallel processing on the same server machine as multiple processes.

Fig. 1 shows a block diagram of the second embodiment of the present invention, 1 is a file distribution server apparatus transmitting data block with respect to each file distribution, 2-1, 2-2, 2-N are reception client apparatuses reconstructing distribution object files respectively, 3-1 and 3-2 are the first and the second retransmission server apparatuses receiving retransmission requests from the reception client apparatus and retransmitting required data, and 4-1 and 4-2 are the first and the second delivery confirmation server apparatuses receiving delivery confirmation from the reception client apparatus. Note that the retransmission server apparatus and the delivery confirmation server are not limited to two, and may be more than two.

The operation of the file distribution server apparatus, which will be described with the use of Fig. 6, comprises the following steps:
a step of assigning one distribution ID overlapping the others when the file distribution is activated and generating the reception parameter 401 shown in Fig.4 (step S201);
a step of registering on the distribution processing list (step S202);
a step of transmitting the reception parameter (N bit length, including padding data) M times (step S204 and S205);
a step of transmitting one data block (N bit length) of the distribution object file from the head to the end-of-file data (step S206, S207 and S208).

Here, the end-of-file data, to which padding data (more than 0 bits) is attached, is transmitted as the data block having N bit length and as the end of flag =1 (step S209). Fig. 4 shows content of data transmitted when the file distribution server apparatus 1 executes file distribution. In Fig. 4, 401 corresponds to the reception parameter used for reception processing, 402 corresponds to data block into which the distribution object file is split, and 403 corresponds to the end-of-data block comprising the end-of-file data of the data block. In the present embodiment, the reception parameter includes multiple retransmission request addresses and delivery confirmation addresses.

The operation of the file reception client apparatus 2-n (n=1, 2; N), which will be described with the use of Fig. 7, comprises the following steps:
a step of waiting for the data packet to specify the multicast address when the file reception client apparatus 2-n is activated (step S501);
a step of determining, by type field of packet header, whether the data packet is a distribution interruption message or another packet when the data packet to a specific multicast address is received (step S502);
a step of deleting items of the relevant distribution ID from the reception processing file distribution list in cases where the reception data packet is the distribution interruption message (step S511);
a step of waiting for data packets again (step S501);
a step of searching the reception processing list by distribution ID attached to data block in cases where the reception data packet is a data block (step S503) (The reception parameter is also considered to be a kind of data block as shown in 401 of Fig. 4);
a step of registering the relevant distribution ID to the reception processing list as the distribution processing when the relevant ID is not detected (step S504);
a step of activating the retransmission request transmission process (step S505);
a step of searching the received data management list by the distribution ID, offset, and size of data, and of determining whether unreceived data is included therein (step S506);
a step of writing or overwriting the reception data block on the relevant offset position of the reception processing contemporary file when the unreceived data is included therein (step S507);
a step of updating the received data management list of the file reception process information specified by the distribution ID (step S508) ;
a step of considering that reception of the relevant file is completed when the data block with the end mark of the relevant distribution ID has already been received and there has been no reception failed data (step S509) ;
a step of transmitting retransmission request to one of the delivery confirmation servers, selected from the delivery confirmation server apparatuses, specified as multiple delivery confirmation addresses (IP address and port) by the reception parameter with respect to each distribution ID, by using random numbers, by using TCP/IP protocol when the time, calculated by a random number less than the response distributed-time D specified by file information with respect to each distribution ID, has passed since that point.

For example, a number starting from 0 is given to the delivery confirmation address, an integer random number is generated, the remainder is calculated by dividing the random number by the delivery confirmation address, and the confirmation delivery address to which the remainder is given is selected. Moreover, in cases where a random number is not used, it may be permitted to give an integer number to the reception client apparatus in advance and to calculate the reminder of a division wherein the integer number is divided by the delivery confirmation address. Moreover, a random number less than the response distributed-time D may be calculated from the delivery confirmation distributed-time, specified by the reception parameter, multiplied by a random number, no less than 0 nor more than 1, or may be generated directly. Moreover, as described in the first embodiment, it may be calculated from a value of function, wherein the number of the reception client apparatus corresponds to an input, multiplied by the delivery confirmation distributed time. When connection by TCP/IP protocol fails, another delivery confirmation address is sequentially selected and transmitted thereto. When transmission of the delivery confirmation is successful (step S510), the item of the relevant file distribution ID is deleted from the reception processing list (step S511).

The retransmission request transmission process activated by the reception client apparatus comprises the following steps;
a step of acquiring reception failure detection time interval I, retransmission request delay time P1 and retransmission request distributed-time D1 from the reception parameter of the relevant distribution ID (step S521);
a step of generating random number R (0≧R≦1) (step S522);
a step of detecting unreceived data after (P1+D1×R) seconds have passed since a predetermined reception time by searching received data list of reception ID at every interval I specified by the reception failure detection time of the reception parameter (step S526); and
a step of transmitting the retransmission request of the relevant reception failed data at every detection thereof (step S527). Here, the one retransmission request address selected from multiple retransmission request addresses (IP address and number of port) specified by reception parameter with respect to each distribution ID, connection by TCP/IP protocol is tested. In cases where the connection by TCP/IP protocol fails because of disruption or maintenance of the retransmission server apparatus thereto connected, the connection by TCP/IP protocol to the other address specified to the reception parameter is tested, so that a retransmission request is transmitted to the first retransmission server to which the connection by TCP/IP protocol is successful. Moreover, as described in the first embodiment, a value of function, wherein number of the reception client apparatus corresponds to an input, may be used.

When the retransmission server apparatus 3-1 and 3-2 receive the retransmission request, reception server ID, distribution ID, data offset, and size of data, which are included in the retransmission request,-are recorded, and after a predetermined time, the relevant data is acquired and is retransmitted by multicast. However, a retransmission request of the same data, received within a predetermined time before retransmission, is transmitted at one time. Moreover, in cases where the satellite communication cannot be used at the predetermined time of retransmission, unicast is used for the retransmission or the distribution termination packet is distributed and the retransmission is cancelled. Moreover, in cases where the reception frequency of the retransmission request of one distribution ID exceeds a predetermined level, the distribution termination packet is distributed and the distribution is terminated.

In the second embodiment of the present invention as described hereinabove, the reception parameter includes multiple retransmission request transmission addresses corresponding to multiple retransmission server apparatuses and multiple delivery confirmation transmission addresses corresponding to multiple delivery confirmation server apparatuses, thereby enabling expansion, repair modifications, maintenance, testing, and change of system configuration of the delivery confirmation server or the retransmission server while operating file distribution is in progress.

Note that some of the file distribution server apparatus, the retransmission server apparatus, and the delivery confirmation server apparatus, which are the components of the above embodiment, may be operated in parallel processing on the same server machine as multiple processes.

Fig. 1 shows a block diagram of the third embodiment of the present invention, 1 is a file distribution server apparatus transmitting data block with respect to each file distribution, 2-1, 2-2, 2-N are reception client apparatuses reconstructing the distribution object file respectively, 3-1 and 3-2 are the first and second retransmission server apparatuses receiving retransmission requests and retransmitting required data, and 4-1 and 4-2 are the first and the second delivery confirmation server apparatuses receiving delivery confirmation. Note that the retransmission server apparatus and the delivery confirmation server are not limited to two, and may be more than two.

Regarding the file distribution system comprised as described hereinabove, a point at which the file distribution server transmits data and a point at which the reception server transmits the retransmission request will be described with the use of Fig. 5. At the first data transmission 51, the file distribution server 1 sequentially transmits data block row DB0∼DBm. At the second data transmission 52, the same data block row DB0∼DBm as of the first data transmission is transmitted after time S . At the third data transmission 53, the same data block row DB0∼DBm as of the first data transmission is transmitted after one more time S. Thereby it becomes possible to transmit the same data block DBn (n=0∼N) three times at time interval S. In cases where one reception client apparatus 2-k fails to receive data block 61 at the first transmission, there are two chances of receiving the same data block (62 and 63)during S×2 length of time since the point of failure. In cases where the reception of the data block 62 or 63 is successful during (S×2+α) wherein transmission of the retransmission request 80 of data block 61 is awaited, the retransmission request 80 of data block 61 is not transmitted. Herein, the retransmission request delay time P=S×2 and the retransmission request distributed time D are numerical values, distributed from file distribution server as a part of the reception parameter, corresponding to α = D×R. Herein, R corresponds to a random number, no less than 0 nor greater than 1, generated with respect to each reception client apparatus. However, as described in the first embodiment, it may be calculated as a value of function wherein the number of a reception client apparatus corresponds to an input.

The operation of the retransmission server apparatus, when it has received a retransmission request and when the operation of the delivery confirmation server has received a delivery confirmation, is the same as of the file distribution system in the first embodiment of the present invention.

Note that, although the case that data transmission is repeated three times has been described hereinabove with the use of Fig. 5, this holds true for the case that the number of repetitions is N times (N indicates an integer greater than 2). In this case, however, it corresponds to P=S×(N-1).

In the third embodiment of the present invention as described hereinabove, when the same data block is failed to receive N times repeatedly, it becomes possible to transmit a retransmission request one time and to assemble reception failures sequentially occurring during time(α= D×R) into one retransmission request.

According to the present invention as described hereinabove, firstly, by distributing a retransmission request transmission address and the delivery confirmation transmission address with respect to each file distribution, the file distribution system is capable of switching the delivery confirmation server to the retransmission request server.

Secondly, by comprising the file distribution server apparatus distributing the delivery confirmation distributed-time and the retransmission request distributed-time with respect to each file distribution, the distribution side is able to specify the time according to the number of the reception client apparatuses, so that it becomes able to be effective in the distribution to a large number of reception apparatuses and be effective in the distribution to a small number of reception apparatuses.

Thirdly, by comprising the file distribution server apparatus distributing multiple retransmission request transmission addresses and multiple delivery confirmation transmission addresses with respect to each file distribution, it is able to execute distributed processing of counting the delivery confirmation and the retransmission request on multiple apparatuses according to the necessity in increments of file distribution, to shorten the amount of time for processing of file distribution, and to carry on the file distribution process in progress even if failure occurs on a part of the retransmission server apparatus or on a part of the delivery confirmation server apparatus.

Fourthly, by comprising the reception client apparatus, setting the retransmission request delay-time and the retransmission request distributed-time and transmitting multiple retransmission requests at one time, it becomes possible to reduce the number of connections to the up-link and to distribute the connection time. Thereby it becomes able to implement the file distribution system to reduce the connection cost of the up-link and required processing ability of the retransmission server.

## Claims

1. A file distribution server apparatus wherein a reception client apparatus transmits a reception parameter and files for distribution used for reception process with respect to each file distribution by multicast.

2. The file distribution server apparatus as defined in claim 1 wherein said receiving parameter or said file for distribution is transmitted departing from more than one segment.

3. A reception client apparatus transmitting retransmission request notifying that reception failures of a plurality of data blocks are detected, or delivery confirmation notifying whether the whole file for distribution has been received successfully or whether the whole file for distribution has been stored successfully.

4. A file distribution system comprising;
the file distribution server as defined in claim 2 transmitting the reception parameter and the data block to more then one reception client apparatus through a down-link,
the reception client apparatus as defined in claim 3 transmitting the delivery confirmation and the retransmission request through an up-link.

5. The reception client apparatus as defined in claim 3 receiving the address, IP address, and port number.

6. The reception client apparatus as defined in claim 3 receiving multiple retransmission request addresses or multiple delivery confirmation addresses, and transmitting the retransmission request address or the delivery confirmation address selected from multiple retransmission request addresses or multiple delivery confirmation addresses.

7. The reception client apparatus as defined in claim 6 selecting one address from the multiple retransmission request addresses or the multiple delivery confirmation addresses by a random number, and transmitting the retransmission request or the delivery confirmation.

8. The reception client apparatus as defined in claim 6 selecting one address from the multiple retransmission request addresses or the multiple delivery confirmation addresses by using a number of the reception client apparatus, and transmitting retransmission request or delivery confirmation.

9. The reception client apparatus as defined in claim 6 selecting other retransmission requests address or delivery confirmation address in cases where it is impossible to connect to a retransmission request address or delivery confirmation address, and transmitting retransmission request address or delivery confirmation address.

10. The file distribution system as defined in claim 4 comprising the reception client apparatus as defined in claim 5, 6, 7, 8, or 9.

11. The reception client apparatus as defined in claim 3 determining a waiting time from the detection of reception failure of data block by the formula (P+D×R) based on the retransmission request delay-time P and the retransmission request distributed-time D which are comprised in the reception parameter, and numerical value R(0 ≦ R ≦ 1) which each reception client apparatus independently generates, until transmission of the retransmission request.

12. The reception client apparatus as defined in claim 3 determining a waiting time from the completion of reconfiguration of the distribution object file by the formula(P+D×R) based on the delivery confirmation distributed-time D' which is comprised in the reception parameter and numerical value R(0 ≦ R ≦ 1) which each reception client apparatus independently generates, until transmission of the delivery confirmation.

13. The reception client apparatus as defined in either claim 11 or 12 determining the numerical value R by a random number.

14. The reception client apparatus as defined in either claim 11 or 12 calculating the numerical value R as a value of function in which the number of a reception client apparatus is input.

15. The reception client apparatus as defined in claim 3 transmitting retransmission request, resulted from reception failure of data block detected during the waiting time from the detection of reception failure of the data block until transmission of the retransmission request, at one connection to the up-link.

16. The reception client apparatus as defined in claim 4 comprising the reception client apparatus as defined in any one of claims 11, 12, 13, 14, or 15.

17. The file distribution server apparatus as defined in claim 2 repeatedly distributing the transmission starting times of the same distribution object file N times (N indicates an integer number more than 1) with a sequential delay of S seconds (S>0).

18. The file distribution server apparatus as defined in claim 17 determining the retransmission request delay-time P by a formula S×(N-1).

19. The file distribution server apparatus as defined in claim 2 determining the retransmission request distributed-time D according to the number of reception client apparatuses receiving distribution object, occurrence frequency of the retransmission requests, or distribution time.

20. The file distribution system apparatus as defined in claim 4 comprising the file distribution server apparatus as defined in claim 17, 18, or 19

21. The file distribution system apparatus as defined in any one of claims 4, 10, 16, or 20 comprising retransmission server apparatus wherein satellite connection or terrestrial connection is selected as the down-link, and retransmission by multicasting is executed only in the time zone where the satellite connection can be used.
